Europäisches Patentamt

European Patent Office

Office européen des brevets

(11) Veröffentlichungsnummer: **0 269 996 B1**

(12) **EUROPÄISCHE PATENTSCHRIFT**

(45) Veröffentlichungstag der Patentschrift: 27.02.91

(21) Anmeldenummer: 87117417.3

(22) Anmeldetag: 25.11.87

(51) Int. Cl.⁵: **C03C 21/00**, C03C 15/00, C09K 13/00, C23F 1/26, //G02B6/10

(54) Verfahren zur Herstellung eines vergrabenen Bereichs erhöhter Brechzahl in einem Glaskörper durch Ionenaustausch.

(30) Priorität: 01.12.86 DE 3641018

(43) Veröffentlichungstag der Anmeldung:
08.06.88 Patentblatt 88/23

(45) Bekanntmachung des Hinweises auf die Patenterteilung:
27.02.91 Patentblatt 91/09

(84) Benannte Vertragsstaaten:
DE FR GB

(56) Entgegenhaltungen:
EP-A- 0 168 706
US-A- 3 817 730

APPLIED OPTICS, Band 23, Nr. 11, 1. Juni 1984, New York E. Okuda et al. "Planar gradientindex glass waveguide and its applications to a 4-port branched circuit and star coupler" Seite 1745-1748

(73) Patentinhaber: Siemens Aktiengesellschaft
Wittelsbacherplatz 2
D-8000 München 2(DE)

(72) Erfinder: Clemens, Peter, Dipl.-Phys.
Leopoldstrasse 136
D-8000 München 40(DE)
Erfinder: Michel, Herbert
Saleggstrasse 14
D-8000 München 90(DE)
Erfinder: Thoma, Christoph, Dr. Dipl.-Phys.
Kleiberstrasse 11
D-8011 Vaterstetten(DE)

## Beschreibung

Die Erfindung betrifft ein Verfahren zur Herstellung eines vergrabenen Bereichs erhöhter Brechzahl in einem Glaskörper durch Ionenaustausch nach dem Oberbegriff des Patentanspruchs 1.

Bei einem bekannten Verfahren der genannten Art wird beispielsweise bei dem einen feldunterstützen Ionenaustausch die Brechzahl des Glases mit $Cs^+$-Ionen aus einer $CsNO_3/KNO_3$-Schmelze angehoben. Damit $Cs^+$-Ionen nur dort in das Glas eindringen, wo der Bereich erhöhter Brechzahl, beispielsweise ein Streifenwellenleiter oder eine Struktur aus solchen Wellenleitern entstehen soll, wird eine Maske aus Titan verwendet, die gegen das Eindringen der $Cs^+$-Ionen in das Glas sperrt und in welcher der zu erzeugende Bereich erhöhter Brechzahl ausgespart ist. Ein ähnliches Verfahren ist aus Appl. Optics, Vol. 23, Nr. 11 (1984) S. 1745 bekannt.

Der weitere feldunterstützte Ionenaustausch zum Vergraben des Bereichs wird beispielsweise mit einer Salzschmelze durchgeführt, die das Alkali-Ion des Glases, im allgemeinen $Na^+$- oder/und $K^+$-Ionen, enthält. Bei diesem Austausch wandert der bei dem einen Ionenaustausch erzeugte Bereich erhöhter Brechzahl in das Innere des Glaskörpers und wird somit vergraben.

Probleme treten beim Entfernen der etwa 200 bis 500 nm dicken Maske aus Titan von der Oberfläche des Glaskörpers auf. Es ist problematisch, ein Ätzmittel zu finden, welches das Titan wegätzt, ohne die Glasoberfläche oder den Bereich erhöhter Brechzahl, beispielsweise den Streifenwellenleiter oder die Streifenwellenleiterstruktur, zu beschädigen.

Die Maske aus Titan ist durch chemische Reaktion in der heißen Salzschmelze wesentlich resistenter gegen Flußsäure als dies für frische Schichten aus Titan der Fall ist. Auch ein mechanischer Abtrag, beispielsweise ein Abschleifen des Titans ist problematisch, weil sich durch die Behandlung mit der heißen Salzschmelze der Glaskörper verzieht und danach im allgemeinen keine ausreichend planen Oberflächen mehr vorliegen, die ohne Beschädigung oder der Zerstörung des Bereichs erhöhter Brechzahl geschliffen oder poliert werden können.

Aufgabe der Erfindung ist es, aufzuzeigen, wie bei einem Verfahren der eingangs genannten Art das Titan problemlos und ohne Gefahr für den Bereich erhöhter Brechzahl entfernt werden kann.

Diese Aufgabe wird durch die im kennzeichnenden Teil des Patentanspruchs 1 angegebenen Merkmale gelöst.

Diese Lösung beruht auf der neuen Erkenntnis, daß durch eine EDTA-Ätzlösung das Titan zwar ohne Beschädigung der Glasoberfläche abgeätzt werden kann, daß danach aber die vom Titan befreite Glasoberfläche wie eine Ionensperre wirkt, die beim weiteren Ionenaustausch das Eindringen der Ionen in das Glas verhindert und daß durch einen geringfügigen Materialabtrag an dieser Oberfläche, der den Bereich erhöhter Brechzahl nicht beeinträchtigt, die ionensperrende Wirkung beseitigt werden kann.

Als EDTA-Lösung hat sich eine Lösung bewährt, die bezogen auf 200 ml $H_2O$ mindestens 0,1 g Titriplex®III enthält. Darauf ist Anspruch 2 gerichtet. Titriplex®III ist der Handelsname der Firma Merck für EDTA.

Vorzugsweise wird eine Ätzlösung verwendet, die neben Titriplex®III noch $H_2O_2$ und $NH_3$ enthält (Anspruch 3). Bevorzugterweise wird eine Ätzlösung verwendet, die bezogen auf 200 ml $H_2O$ aus 0,1 g - 25 g Titriplex®III, 0 g - 80 g $H_2O_2$ und 0 g - 80 g $NH_3$ zusammgesetzt ist (Anspruch 4).

Es sei darauf hingewiesen, daß die Verwendung einer EDTA-Ätz lösung zum schonenden Ätzen einer Ti-Schicht bereits aus Electron. Lett. Vol. 20, Nr. 19 (1984) S. 760 bekannt ist. Die Titanschicht befindet sich dort aber nicht auf Glas sondern auf $LiNbO_3$ und das dort beschriebene Verfahren bezieht sich nicht auf einen Ionenaustausch.

Vorzugsweise wird der geringfügige Materialabtrag gemäß Anspruch 5 durch Polieren erzeugt. Er kann aber auch durch Ätzen erzeugt werden (Anspruch 6).

Ein Ausführungsbeispiel der Erfindung wird in der folgenden Beschreibung anhand der Figuren soweit erläutert, als es für das Verständnis der Erfindung erforderlich ist. Von den Figuren zeigen:

Figur 1    im Schnitt eine herkömmliche Vorrichtung zur Durchführung des einen Ionenaustauschs,

Figur 2    im Schnitt eine Vorrichtung zur Durchführung des Ätzschrittes zur Entfernung des Titans,

Figur 3    in Seitenansicht den Glaskörper mit zwei Streifenwellenleitern an der Oberfläche des Körpers, die senkrecht zur Zeichenebene verlaufen,

Figur 4    im Schnitt eine herkömmliche Vorrichtung zur Durchführung des weiteren Ionenaustauschs und

Figur 5    in einer Seitenansicht wie in Figur 2 den Glaskörper mit den beiden vergrabenen Streifenwellenleitern.

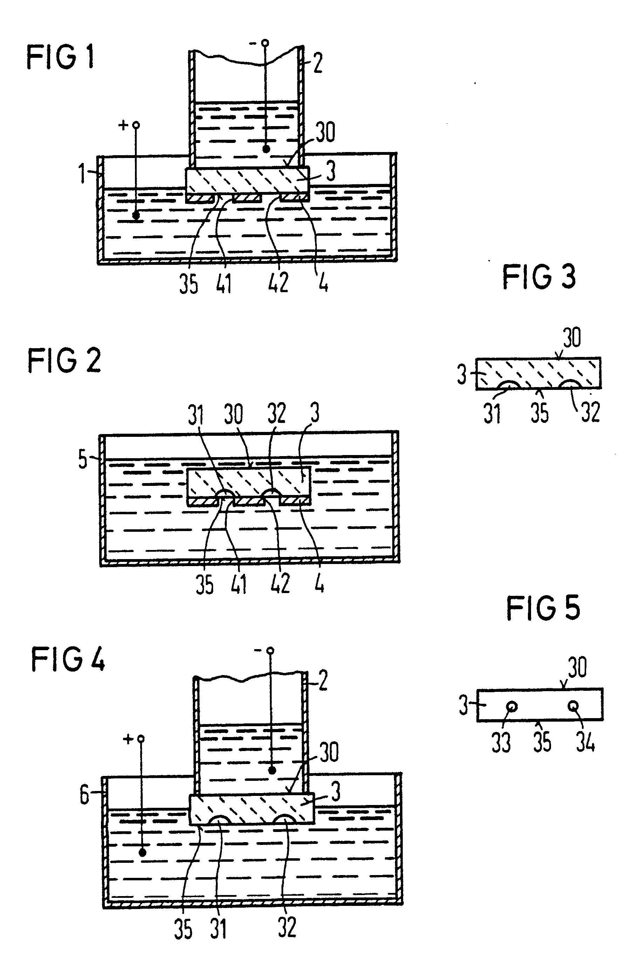

Die Vorrichtung nach Figur 1 umfaßt einen Behälter 1 für eine $CsNO_3/KNO_3$-Schmelze und ein Rohr 2 für eine $KNO_3$-Schmelze, an dessen unteres Ende der Glaskörper 3 gesaugt ist, in dem die beiden vergrabenen Streifenwellenleiter erzeugt werden sollen. Eine derartige Vorrichtung ist beispielsweise aus Electr. Lett. Vol. 18, No. 8 (1982) bekannt. Die $KNO_3$-Schmelze kontaktiert den Kör-

per 3 an der Oberseite 30 kathodisch, während in die CsNO$_3$/KNO$_3$-Schmelze an der Unterseite 35 anodisch kontaktiert. Dort ist auch die Maske 4 aus Titan aufgebracht, welche gegen das Eindringen der Cs$^+$-Ionen in das Glas sperrt und in der die Streifen 41 und 42 für die Streifenwellenleiter ausgespart sind.

Während des bei etwa 400°C durchgeführten feldunterstützten Ionenaustausches dringen Cs$^+$-Ionen im Bereich der Streifen 41 und 42 in das Glas ein und heben in diesem Bereich die Brechzahl des Glases an, so daß auf der Unterseite 35 des Glaskörpers 3 Streifenwellenleiter 31 und 32 an der Oberfläche entstehen.

Der Glaskörper 3 mit den Streifenwellenleitern 31 und 32 und der Maske 4 aus Titan wird aus der Vorrichtung nach Figur 1 entfernt und in eine EDTA-Ätzlösung in einem Behälter 5 gegeben, in der das Titan ohne Beeinträchtigung der Glasoberfläche abgeätzt wird (Figur 2). EDTA steht für Ethylendinitrilotetraessigsäure Dinatriumsalz (Dihydrat), chemische Summenformel C$_{10}$H$_{14}$N$_2$Na$_2$O$_8$.2H$_2$O .

Die EDTA-Lösung kann beispielsweise folgende Zusammensetzung haben:
5 g Titriplex®III
200 ml H$_2$O
20 ml H$_2$O$_2$-Lösung, 30%ig
20 ml NH$_3$-Lösung, 25%ig.

Nach dem Abätzen des Titans entsteht der in Figur 3 dargestellte Glaskörper 3 mit den beiden Streifenwellenleitern 31 und 32 an der Unterseite 35. Die vom Titan befreite Unterseite 35, d.h. der Bereich der Unterseite 35 der vom Titan bedeckt war, wirkt als Ionensperre, so daß der weitere Ionenaustausch nicht durchgeführt werden kann. Beim Abätzen des Titans bleibt eine dünne ionensperrende Schicht übrig, die aber problemlos und ohne Beeinträchtigung der Streifenwellenleiter 31 und 32 abpoliert werden kann. Auch eine Ätzbehandlung ist geeignet, wobei sowohl Naß- als auch Trockenätzverfahren verwendet werden können. Es ist lediglich darauf zu achten, daß der Ätzvorgang so kurz gewählt wird, daß die Streifenwellenleiter 31 und 32 nicht beeinträchtigt werden, die sperrende Wirkung der Unterseite 35 jedoch beseitigt wird. Dies läßt sich wie beim Abpolieren leicht durch Probieren finden.

An dem polierten Körper wird zum Vergraben der Streifenwellenleiter 31 und 32 der zweite Ionenaustausch vorgenommen. Dazu ist eine ähnliche Vorrichtung wie die Vorrichtung nach Figur 1 vorgesehen, die sich von dieser Vorrichtung nur dadurch unterscheidet, daß anstelle des Behälters 1 mit der CsNO$_3$/KNO$_3$-Schmelze ein Behälter 6 mit einer KNO$_3$-Schmelze verwendet wird, welche die Unterseite 35 mit den Wellenleitern 31 und 32 des Glaskörpers 3 anodisch kontaktiert. Nach Durchführung dieses Ionenaustauschs bei wiederum einer Temperatur von etwa 400°C wandern die Streifenwellenleiter 31 und 32 von der Unterseite nach oben in das Innere des Glaskörpers 3, so daß schließlich der in Figur 5 gezeigte Glaskörper 3 mit den vergrabenen Streifenwellenleitern 33 und 34 entsteht.

**Ansprüche**

1. Verfahren zur Herstellung eines vergrabenen Bereichs (33, 34) erhöhter Brechzahl in einem Glaskörper (3) durch Ionenaustausch,
   wobei zuerst ein Bereich (31, 32) erhöhter Brechzahl an der Oberfläche des Glaskörpers (3) durch einen feldunterstützten Ionenaustausch mit einer die Brechzahl des Glases anhebenden Ionensorte aus einer den Glaskörper (3) kontaktierenden Salzschmelze mit Hilfe einer auf den Glaskörper (3) aufgebrachten und gegen das Eindringen der Ionensorte aus der Salzschmelze in das Glas sperrenden und den Bereich (31, 32) erhöhter Brechzahl an der Oberfläche aussparenden Maske (4) aus Titan hergestellt wird,
   wobei nach der Herstellung dieses Bereichs (31, 32) erhöhter Brechzahl an der Oberfläche das Titan mit einem Ätzmittel abgeätzt wird, und
   wobei durch einen weiteren feldunterstützen Ionenaustausch mit einer die Brechzahl des Glases nicht anhebenden anderen Ionensorte an der den Bereich (31, 32) erhöhter Brechzahl enthaltenden Oberfläche des Glaskörpers (3) dieser Bereich (31, 32) vergraben wird,
   **dadurch gekennzeichnet,**
   daß das während des einen Ionenaustauschs der heißen Salzschmelze ausgesetzte Titan mit einer EDTA-Ätzlösung abgeätzt wird, und daß vor der Durchführung des weiteren feldunterstützten Ionenaustausch zusätzlich an der vom Titan befreiten Oberfläche des Glaskörpers ein den Bereich (31, 32) erhöhter Brechzahl an der Oberfläche nicht beeinträchtigender geringfügiger Materialabtrag vorgenommen wird.

2. Verfahren nach Anspruch 1, **dadurch gekennzeichnet,** daß eine Ätzlösung verwendet wird, die bezogen auf 200 ml H$_2$O mindestens 0,1 g Titriplex® III enthält.

3. Verfahren nach Anspruch 2, **dadurch gekennzeichnet,** daß eine Ätzlösung verwendet wird, die neben Titriplex®III noch H$_2$O$_2$ und/oder NH$_3$ enthält.

4. Verfahren nach Anspruch 2 oder 3, **dadurch gekennzeichnet,** daß eine Ätzlösung verwendet wird, die bezogen auf 200 ml $H_2O$ aus 0,1 g - 25 g Titriplex®III, 0 g - 80 g $H_2O_2$ und 0 g - 80 g $NH_3$ zusammengesetzt ist.

5. Verfahren nach einem der vorhergehenden Ansprüche, **dadurch gekennzeichnet,** daß der geringfügige Materialabtrag durch Polieren der vom Titan befreiten Oberfläche des Glaskörpers (3) erzeugt wird.

6. Verfahren nach einem der vorhergehenden Ansprüche, **dadurch gekennzeichnet,** daß der geringfügige Materialabtrag durch kurzes Ätzen der vom Titan befreiten Oberfläche des Glaskörpers (3) erzeugt wird.

## Claims

1. Method of producing a buried region (33, 34) with a raised refractive index in a glass body (3) by ion exchange,

   a region (31, 32) with a raised refractive index being firstly produced on the surface of the glass body (3) by field-aided ion exchange, using an ion type which raises the refractive index of the glass and comes from a salt melt contacting the glass body (3) with the aid of a mask (4) of titanium which is applied to the glass body (3), blocks the penetration of the ion type from the salt melt into the glass and covers the region (31, 32) of raised refractive index at the surface,

   the titanium being etched away with an etchant after the production of said region (31, 32) with a raised refractive index, and

   said region (31, 32) being buried by a further field-aided ion exchange, using another ion type not raising the refractive index of the glass, at the surface of the glass body (3) containing the region (31, 32) with a raised refractive index,

   characterized in that the titanium exposed during the one ion exchange to the hot salt melt is etched away with an EDTA etching solution, and in that, additionally, before carrying out the field-aided ion exchange slight material erosion that does not impair the region (31, 32) with a raised refractive index at the surface is undertaken at the surface of the glass body freed from the titanium.

2. Method according to Claim 1, characterized in that an etching solution is used which with reference to 200 ml of $H_2O$ contains at least 0.1 g Titriplex®III.

3. Method according to Claim 2, characterized in that an etching solution is used which in addition to Titriplex®III further contains $H_2O_2$ and/or $NH_3$.

4. Method according to Claim 2 or 3, characterized in that an etching solution is used which with reference to 200 ml of $H_2O$ is composed of 0.1 g - 25 g Titriplex®III, 0 g - 80 g $H_2O_2$ and 0 g - 80 g $NH_3$.

5. Method according to one of the preceding claims, characterized in that the slight material erosion is produced by polishing the surface of the glass body (3) freed from the titanium.

6. Method according to one of the preceding claims, characterized in that the slight material erosion is produced by briefly etching the surface, freed from titanium, of the glass body (3).

## Revendications

1. Procédé d'obtention d'une région ensevelie (33, 34) à grand indice de réfraction dans un corps en verre (3), par échange d'ions, qui consiste

   à établir d'abord une région (31, 32) à grand indice de réfraction à la surface du corps de verre (3) par un échange d'ions assisté par un champ, avec un genre d'ions qui augmente l'indice de réfraction du verre et provenant d'un sel fondu en contact avec le corps en verre (3), à l'aide d'un masque en titane, appliqué sur le corps en verre (3), empêchant la pénétration du genre d'ions à partir du sel fondu dans le verre et dégageant la région (31, 32) à grand indice de réfraction à la surface,

   à enlever, après l'obtention de cette région (31, 32) à indice de réfraction élevé à la surface, le titane par un agent d'attaque chimique, et

   à ensevelir cette région (31, 32) en effectuant, à la surface du corps en verre (3) contenant la région (31, 32) de grand indice de réfraction, un autre échange d'ions assisté par un champ avec un autre genre d'ions n'augmentant pas l'indice de réfraction du verre,

   caractérisé en ce qu'il consiste à attaquer chimiquement, pendant le premier échange d'ions, le titane exposé au sel fondu chaud par une solution d'attaque d'EDTA et, avant d'effectuer le second échange d'ions assisté par un champ, à procéder en outre, à la surface du corps en verre débarrassé du titane, à un faible enlèvement de matériau ne portant pas atteinte à la région (31, 32) à grand indice de réfraction à la surface.

2. Procédé suivant la revendication 1, caractérisé en ce qu'il consiste à utiliser une solution d'attaque chimique qui contient, pour 200 litres d'$H_2O$, au moins 0,1 g de Titriplex III (marque de fabrique).

3. Procédé suivant la revendication 2, caractérisé en ce qu'il consiste à utiliser une solution d'attaque chimique qui contient, outre du Titriplex III (marque de fabrique), $H_2O_2$ et/ou $NH_3$.

4. Procédé suivant la revendication 2 ou 3, caractérisé en ce qu'il consiste à utiliser une solution d'attaque chimique qui, pour 200 ml d'eau, est composée de 0,1 g à 25 g de Titriplex III (marque de fabrique), de 0 g à 80 g d'$H_2O_2$ et de 0 à 80 g de $NH_3$.

5. Procédé suivant l'une des revendications précédentes, caractérisé en ce qu'il consiste à obtenir le faible enlèvement de matériau en polissant la surface du corps en verre (3) débarrassé du titane.

6. Procédé suivant l'une des revendications précédentes, caraotérisé en ce qu'il consiste à obtenir le faible enlèvement de matériau en attaquant brièvement par voie chimique la surface du corps en verre (3), qui a été débarrassée du titane.

EP 0 269 996 B1

FIG 1

FIG 2

FIG 3

FIG 4

FIG 5